# EUROPÄISCHE PATENTSCHRIFT

(11) **EP 1 313 960 B1**
(45) Veröffentlichungstag und Bekanntmachung des Hinweises auf die Patenterteilung: **28.12.2005**
(21) Anmeldenummer: 01985741.6
(22) Anmeldetag: 17.08.2001
(51) Int. Cl.: F16C 39/06

(54) **MAGNETLAGERUNG**
MAGNETIC BEARING ARRANGEMENT
LOGEMENT DE PALIERS MAGNETIQUES

(30) Priorität: 02.09.2000 DE 10043302
(43) Veröffentlichungstag der Anmeldung: 28.05.2003
(73) Patentinhaber: FORSCHUNGSZENTRUM JÜLICH GMBH, 52425 Jülich (DE)
(72) Erfinder: FREMEREY, Johan, K., 53127 Bonn (DE)
(74) Vertreter: Paul, Dieter-Alfred
(86) Internationale Anmeldenummer: PCT/EP2001/009493
(87) Internationale Veröffentlichungsnummer: WO 2002/027205

(56) Entgegenhaltungen:
- US-A- 4 040 681
- US-A- 4 363 525
- US-A- 4 387 935
- US-A- 5 982 065

## Beschreibung

Die Erfindung betrifft eine Magnetlagerung für ein Bewegungselement mit den Merkmalen des Oberbegriffs des Anspruchs 1.

In der DE 38 18 556 A1 ist eine solche Magnetlagerung innerhalb einer Vakuumpumpe offenbart. Als Bewegungselement hat sie einen Rotor, an dem Rotorschaufeln angebracht sind, die sich mit Statorschaufeln abwechseln. Für die Seitenführung des Rotors sind zwei im axialen Abstand angeordnete passive Magnetlager vorgesehen, die jeweils aus zwei konzentrischen kreisförmigen Permanentmagneten bestehen, von denen jeweils der eine am Rotor und der andere am Stator, also gerätefest, angeordnet und die sich gegenseitig abstoßend magnetisiert sind.

Am unteren Ende des Rotors ist ein regelbares Magnetlager mit einem Elektromagneten angeordnet, der auf eine am Rotor befestigte Anzugsscheibe wirkt. Der Elektromagnet besteht in üblicher Weise aus einem ein Statorelement bildenden, magnetisierbaren Kern und einer aus einem Stromleiter bestehenden Spule. Die Erregung des Elektromagneten wird durch eine Stabilisiereinrichtung gesteuert, die einen Lagesensor zur Erfassung der axialen Stellung des Rotors aufweist. Mit Hilfe des Elektromagneten wird der Rotor in einer Arbeitsposition gehalten, bei der die Permanentmagnete der passiven Magnetlager derart gegeneinander verschoben sind, daß sie eine der Anzugskraft des Elektromagneten entgegengesetzte Axialkraft erzeugen. Die Arbeitsposition ist so vorgesehen, daß der Elektromagnet stets erregt sein muß, um die Arbeitsposition zu halten. Die Stabilisiereinrichtung sorgt durch Variation der Erregung dafür, daß der Rotor bei einer Axialverschiebung immer wieder in die Arbeitsposition zurückbewegt wird.

Nachteilig bei dieser Magnetlagerung ist, daß ständig ein Steuerstrom erforderlich ist, um den Rotor durch den Elektromagneten in der Arbeitsposition zu halten. Außerdem ist die Stabilisierung schwierig, da der Magnetkraftverlauf des Elektromagneten nicht linear ist.

In der DE-OS 29 19 236 ist eine Magnetlagerung beispielsweise für Strömungsmessungen offenbart, die als Bewegungselement einen sich horizontal erstreckenden Rotor aufweist. Um den Rotor schwebend zu halten, sind auch hier zwei passive Magnetlager mit jeweils einem statorseitigen und einem rotorseitigen Permanentmagneten vorhanden, die sich gegenseitig abstoßend magnetisiert sind, wobei die Feldkomponenten der beiden passiven Magnetlager entgegengesetzt gerichtet sind.

In dem Zwischenraum zwischen den beiden passiven Magnetlagern ist eine Magnetspule angeordnet, mit deren Hilfe die Magnetfelder der passiven Magnetlager überlagert werden können. Die Erregung der Magnetspule wird durch eine Regeleinrichtung gesteuert, zu der Lagesensoren gehören, die die axiale Verschiebung des Rotors berührungslos abtesten und den Erregerstrom in Abhängigkeit von der axialen Verschiebung regeln. Je nach Richtung und Größe der elektrischen Ströme in der Magnetspule wird der Rotor in einer bestimmten Arbeitsposition gehalten.

Nachteilig bei diesem Lager ist der weite Abstand zwischen der Magnetspule und den am Bewegungselement befestigten Permanentmagneten. Die erzielbaren Rückstellkräfte für die Stabilisierung der Arbeitsposition des Bewegungselements sind dementsprechend gering. Außerdem belegt die Magnetspule den Platz, an welchem im Fall einer Rotorlagerung sinnvollerweise der Drehfeldstator für den Rotationsantrieb unterzubringen ist.

Der Erfindung liegt die Aufgabe zugrunde, eine Magnetlagerung der eingangs genannten Art so auszubilden, daß sie möglichst einfach gestaltet ist und wenig Strom verbraucht.

Diese Aufgabe wird erfindungsgemäß durch folgende Merkmale gelöst:
l) das regelbare Magnetlager weist einen Permanentmagneten auf;
m) der Permanentmagnet ist am Bewegungselement gegenüber dem Statorelement angeordnet;
n) die Magnetkraft zwischen Permanentmagnet und Statorelement ist so bemessen, daß das Bewegungselement bei Steuerstrom Null in der Arbeitsposition gehalten wird und daß nur bei Abweichung von dieser Arbeitsposition ein die Magnetisierung des Statorelements in Richtung auf Wiederherstellung der Arbeitsposition beeinflussender Steuerstrom erzeugt wird.

Grundgedanke der Erfindung ist es, ein durch repulsive Magnetkräfte passiv stabilisiertes Bewegungselement durch ein benachbartes Statorelement mit attraktiver Wirkung in einer labilen Arbeitsposition zu stabilisieren und das Statorelement mit einem Steuerstrom nur dann zu beaufschlagen, wenn das Bewegungselement diese Arbeitsposition verläßt. Da nur in diesem Fall ein Steuerstrom fließt, ist der Stromverbrauch gering. Außerdem zeichnet sich die erfindungsgemäße Magnetlagerung durch einfache konstruktive Ausbildung aus und ist sowohl für translatorisch als auch für rotatorisch bewegte Bewegungselemente geeignet.

Soweit vorstehend das Wort "ein" oder ein davon abgeleitetes Wort erscheint, ist dies nicht als Zahlwort, sondern als unbestimmter Artikel zu verstehen. Dies gilt grundsätzlich für alle Ansprüche.

Das Statorelement besteht vorzugsweise aus einem weichmagnetischen Stahl. Es kann auch als Permanentmagnet ausgebildet oder aus ferro- und permanentmagnetichen Teilen zusammengesetzt sein.

Grundsätzlich besteht die Möglichkeit, daß die Permanentmagnete aus mehreren Teilmagneten zusammengesetzt sind, die bündig aneinanderliegen oder Abstand zueinander haben.

Um die Arbeitsposition des Bewegungselements besser stabilisieren zu können, ist nach der Erfindung ferner vorgesehen, daß das Statorelement mehrere Stromleiter aufweist und jeder Stromleiter Teil einer eigenen Stabilisiereinrichtung ist. Jeder Stromleiter erhält dann über die jeweils zugeordnete Stabilisiereinrichtung einen eigenen Steuerstrom, dessen Größe und Richtung von dem jeweiligen Lagesensor bestimmt wird.

Eine besonders einfache Ausführungsform der erfindungsgemäßen Magnetlagerung ergibt sich dann, wenn der Permanentmagnet des regelbaren Magnetlagers gleichzeitig auch den bewegungselementseitigen Permanentmagneten des zugehörigen passiven Magnetlagers bildet, so daß das bzw. die statorseitigen Permanentmagnet(e) des passiven Magnetlagers dem Permanentmagneten dieses regelbaren Magnetlagers benachbart liegt bzw. liegen.

Bei gestreckten Bewegungselementen empfiehlt sich die Anordnung mehrerer passiver Magnetlager für die Seitenführung des Bewegungselements mit sich gegenseitig abstoßenden bewegungselementseitigen und statorseitigen Permanentmagneten vorzusehen. Dabei sollten die passiven Magnetlager an den Endbereichen des Bewegungselementes angeordnet sein.

Es können auch mehrere regelbare Magnetlager mit jeweils einem bewegungselementseitigen Permanentmagneten und einem Statorelement vorgesehen sein. Diese Anordnung empfiehlt sich vor allem dann, wenn jedem Statorelement wenigstens eine eigene Stabilisiereinrichtung zugeordnet ist. Dabei kommt auch eine Ausführungsform in Frage, bei der regelbare Magnetlager an den Enden des Bewegungselementes angeordnet sind und deren Permanentmagneten benachbart je ein statorseitiger Permanentmagnet eines passiven Magnetlagers derart zugeordnet ist, daß die Permanentmagnete der regelbaren Magnetlager gleichzeitig die bewegungselementseitigen Permanentmagnete des passiven Magnetlagers bilden.

Das Bewegungselement kann als linear beweglicher Körper ausgebildet sein, dessen Permanentmagnet(e) sich wie die Permanentmagnete des bzw. der passiven Magnetlager(s) in Bewegungsrichtung erstrecken. Das Bewegungselement kann stattdessen aber auch als Rotationskörper ausgebildet sein, dessen Permanentmagnet(e) wie auch die Permanentmagnete des bzw. der passiven Magnetlager(s) Kreisform haben. Dabei können Bewegungselement und Statorelement Ringform haben und können über das Statorelement verteilt mehrere, vorzugsweise mindestens drei Stromleiter angeordnet sein, die jeweils Teil selbständiger Stabilisiereinrichtungen sind. Der Permanentmagnet des regelbaren Magnetlagers sollte dann gleichzeitig den bewegungselementseitigen Permanentmagneten des passiven Magnetlagers bilden und von dem statorseitigen Permanentmagneten des passiven Magnetlagers umgeben sein. Alternativ dazu besteht die Möglichkeit, daß der Permanentmagnet des regelbaren Magnetlagers den statorseitigen Permanentmagneten des passiven Magnetlagers umgibt. Beide Möglichkeiten reichen in der Regel aus, um das Bewegungselement in der Arbeitsposition zu halten. Dies schließt jedoch nicht eine Ausführungsform aus, bei der der Permanentmagnet des regelbaren Magnetlagers innen- und außenseitig von je einem kreisförmigen statorseitigen Permanentmagneten des passiven Magnetlagers eingefaßt ist.

In der Zeichnung ist die Erfindung anhand von Ausführungsbeispielen näher veranschaulicht. Es zeigen:
- Fig. 1: eine erste Ausführungsform einer Magnetlagerung mit einem linear beweglichen Bewegungselement in der Schrägansicht;
- Fig. 2: eine zweite Ausführungsform einer Magnetlagerung mit linear beweglichem Bewegungselement in der Schrägansicht;
- Fig. 3: eine dritte Ausführungsform eines Magnetlagers mit linear beweglichem Bewegungselement in der Schrägansicht;
- Fig. 4: eine erste Ausführungsform einer Magnetlagerung mit rotationsbeweglichem Bewegungselement in Schrägansicht mit Teilschnitt;
- Fig. 5: eine vierte Ausführungsform einer Magnetlagerung mit linear beweglichem Bewegungselement in der Schrägansicht;
- Fig. 6: eine zweite Ausführungsform einer Magnetlagerung mit rotationsbeweglichem Bewegungselement in der Schrägansicht mit Teilschnitt.

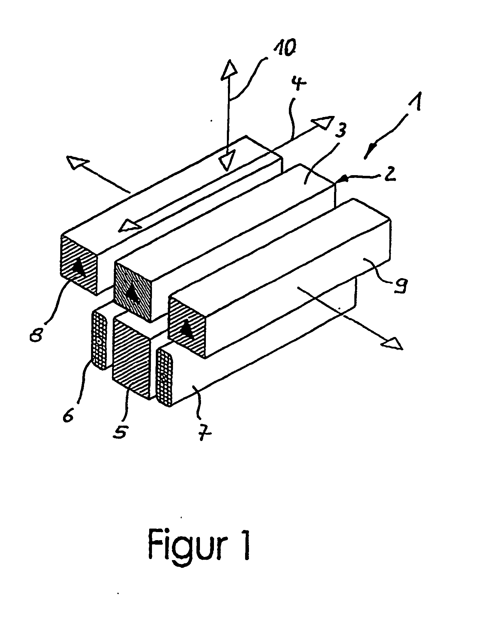

Die in Figur 1 dargestellte Magnetlagerung 1 hat ein stabförmig gestrecktes, im Querschnitt rechteckiges Bewegungselement 2, das aus einem Permanentmagneten 3 besteht, wobei die Magnetisierungsrichtung durch den Pfeil auf der Stirnseite des Bewegungselements 2 angezeigt ist. Das Bewegungselement 2 ist in den Richtungen des Doppelpfeils 4 beweglich und kommt beispielsweise als Teil von Linearmotoren oder Linearführungen in Frage.

Unterhalb des Permanentmagneten 3 ist ein Statorelement 5 aus einem magnetisierbaren Material, vorzugsweise weichmagnetischer Stahl, gerätefest angeordnet, das sich parallel zu dem Bewegungselement 2 erstreckt. Beidseits des Statorelements 5 sind Stromleiter 6, 7 angeordnet, die zu einer Stabilisiereinrichtung gehören, über die ein Steuerstrom auf die Stromleiter 6, 7 gegeben werden kann.

Beidseits des Bewegungselements 2 sind zwei statorseitige Permanentmagnete 8, 9 angeordnet, die - wie die Pfeilsymbole auf den Stirnseiten zeigen - in gleicher Richtung magnetisiert sind wie der Permanentmagnet 3 des Bewegungselements 2. Hierdurch entstehen zwischen den Permanentmagneten 8, 9 und dem Bewegungselement 2 abstoßende Magnetkräfte, wodurch das Bewegungselement 2 in der Mitte zwischen den Permanentmagneten 8, 9 elastisch gehalten wird. Die drei Permanentmagnete 3, 8, 9 bilden also ein passives Magnetlager zur Seitenführung des Bewegungselements 2. Die Permanentmagnete 8, 9 sind Teil des Stators, der hier nicht näher dargestellt ist.

In vertikaler Richtung 10 wirken auf das Bewegungselement 2 zwei Magnetkräfte ein, die sich gegenseitig kompensieren. Die Anziehungskraft zwischen Statorelement 5 und Permanentmagnet 3 ist so bemessen, daß das Bewegungselement 2 in einer gegenüber dem Permanentmagneten 8, 9 leicht nach oben versetzten Arbeitsposition gehalten wird, in der die Permanentmagnete 8, 9 eine nach oben gerichtete Magnetkraft ausüben. Allerdings ist diese Arbeitsposition labil, so daß das Bewegungselement 2 nach oben oder unten ausbrechen kann. Dieser Versatz wird durch einen hier nicht näher dargestellten, berührungslos abtastenden Lagesensor auf induktiver, galvanomagnetischer, kapazitiver oder optischer Basis erfaßt und veranlaßt die Stabilisiereinrichtung dazu, durch die Stromleiter 6, 7 einen Strom zu geben, der die Magnetisierung des Statorelements 5 derart beeinflußt, daß das Bewegungselement 2 wieder in die Arbeitsposition zurückbewegt wird. Hat das Bewegungselement 2 wieder seine Arbeitsposition eingenommen, geht der Steuerstrom auf Null, d. h. in dieser Position verbraucht die Magnetlagerung 1 keinen Strom. Permanentmagnet 3 und Statorelement 5 bilden also mit der Stabilisiereinrichtung ein regelbares Magnetlager, wobei der Permanentmagnet 3 gleichzeitig auch Teil des passiven Magnetlagers ist.

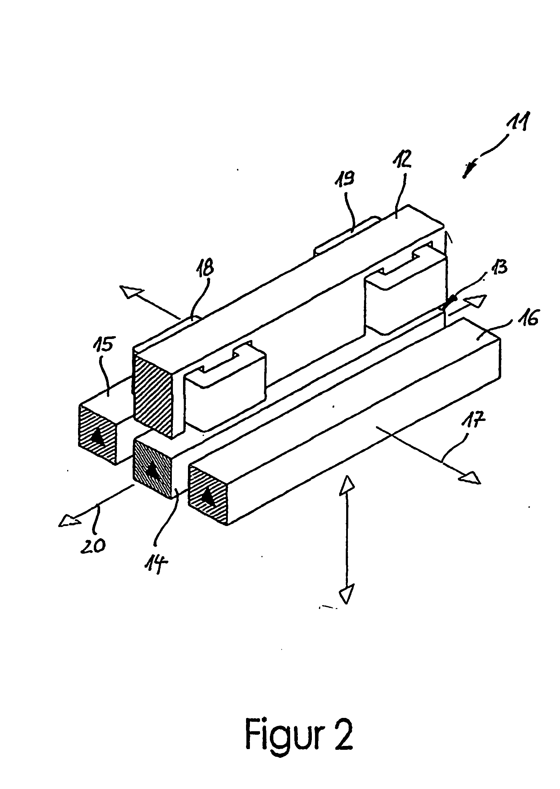

Die in Figur 2 dargestellte Magnetlagerung 11 unterscheidet sich von der Magnetlagerung 1 gemäß Figur 1 nur durch eine andere Anordnung des Statorelements 12 und durch das Vorsehen von zwei Stabilisiereinrichtungen. Das Statorelement 12 ist jetzt oberhalb des Bewegungselements 13 angeordnet. Die zwischen Statorelement 12 und Permanentmagnet 14 des Bewegungselements 13 wirkende Magnetkraft ist so bemessen, daß das Bewegungselement 13 gegenüber den beiden seitlich sich erstreckenden Permanentmagneten 15, 16 in die Arbeitsposition nach unten versetzt ist, so daß diese Permanentmagnete 15, 16 das Bewegungselement 13 aufgrund der abstoßenden Magnetkräfte nicht nur seitlich führt, sondern auch eine nach unten gerichtete Kraft ausübt.

Dieser Kraft entgegengesetzt ist die Anziehungskraft zwischen dem Permanentmagneten 15 des Bewegungselements 13 und dem Statorelement 12, wobei beide Kräfte sich aufheben, wenn sich der Permanentmagnet 14 in der oben beschriebenen, leicht nach unten versetzten Arbeitsposition befindet.

Um ein Kippen des Bewegungselements 13 um die Querachse 17 zuverlässig verhindern zu können, weist die Magnetlagerung 11 zwei Stabilisiereinrichtungen auf, die jeweils einen Stromleiter 18, 19 haben. Die Stromleiter 18, 19 sind an den Enden des Statorelements 12 in Form von Wicklungen angeordnet, und ihnen sind jeweils eigene, hier nicht dargestellte Lagesensoren zugeordnet, die die Lage des Bewegungselements 13 in den Bereichen der Stromleiter 18, 19 erfassen, so daß sie je nach Bewegung des Bewegungselements 13 um die Querachse 17 mit unterschiedlichen Steuerströmen beaufschlagt werden, um das Bewegungselement 13 wieder parallel zu dem Statorelement 12 auszurichten.

Das Bewegungselement 13 ist hier ebenfalls in Längsrichtung 20 beweglich und kommt deshalb für Einsatzfälle in Frage, für die auch die Magnetlagerung 1 gemäß Figur 1 geeignet ist.

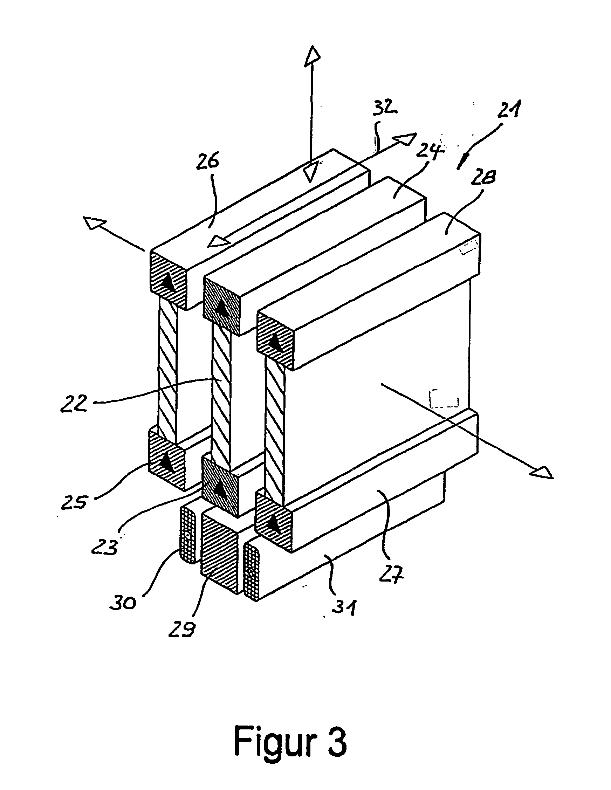

In Figur 3 ist eine weitere Magnetlagerung 21 gezeigt, die eine Abwandlung der Magnetlagerung 1 gemäß Figur 1 darstellt. Sie weist ein plattenförmiges, hochkant stehendes Bewegungselement 22 auf, das sowohl an der Unterseite als auch an der Oberseite sich horizontal erstreckende Permanentmagnete 23, 24 aufweist, die in gleicher Richtung magnetisiert sind. Den Permanentmagneten 23, 24 benachbart sind jeweils zwei statorseitige und deshalb gerätefeste Permanentmagnete 25, 26 bzw. 27, 28, die in gleicher Richtung magnetisiert sind und deshalb das Bewegungselement 22 aufgrund magnetischer Abstoßungseitlich führen. Jeweils drei Permanentmagnete 23, 25, 26 und 24, 27, 28 bilden je ein passives Magnetlager zur Seitenführung des Bewegungselements 22, wobei das Bewegungselement 22 im Unterschied zu der Magnetlagerung 1 gemäß Figur 1 hier kippstabil um die Bewegungsachse geführt ist.

Unterhalb des unteren Permanentmagneten 23 des Bewegungselements 22 ist ein Statorelement 29 angeordnet, das beidseitig von Stromleitern 30, 31 einer Stabilisiereinrichtung eingefaßt ist. Über die Anziehungskraft zwischen dem Permanentmagneten 23 und dem Statorelement 29 aus weichmagnetischem Material wird das Bewegungselement 22 - wie bei der Magnetlagerung 1 - in einer gegenüber den Permanentmagneten 25, 26 bzw. 27, 28 leicht nach oben versetzten Arbeitsposition gehalten, in der die Permanentmagnete 25, 26, 27, 28 eine nach oben gerichtete magnetische Kraft auf das Bewegungselement 22 ausüben, die durch die Anziehungskraft zwischen dem Permanentmagneten 23 und dem Statorelement 29 kompensiert wird. Verläßt das Bewegungselement 22 diese Arbeitsposition nach oben oder nach unten, beaufschlagt die Stabilisiereinrichtung die Stromleiter 30, 31 mit einem Steuerstrom, der die Anziehungskraft zwischen dem Permanentmagneten 23 und dem Statorelement 29 so beeinflußt, daß das Bewegungselement 22 wieder in seine Arbeitsposition zurückkehrt. Der Permanentmagnet 23 ist somit sowohl Teil des unteren passiven Magnetlagers wie auch Teil des regelbaren Magnetlagers.

Es versteht sich, daß das Statorelement 29 auch mit zwei unabhängigen Stabilisiereinrichtungen wie bei dem Ausführungsbeispiel gemäß Figur 2 versehen sein kann. Im übrigen ist auch das hier gezeigte Bewegungselement 22 linear beweglich in den durch den Doppelpfeil 32 angegebenen Richtungen und eignet sich deshalb für die Einsatzfälle, für die auch die Magnetlagerungen 1, 11 gemäß den Figuren 1 und 2 vorgesehen sind.

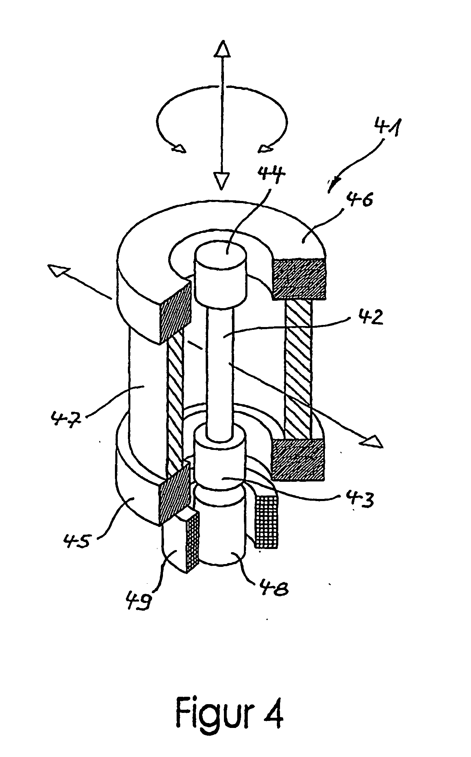

Die in Figur 4 dargestellte Magnetlagerung 41 stellt eine rotationssymmetrische Variante der Magnetlagerung gemäß Figur 3 dar. Die Magnetlagerung 41 weist einen sich vertikal erstreckenden und um die Vertikalachse drehbaren Rotor 42 als Bewegungselement auf, der an seinen stirnseitigen Enden jeweils einen kreisrunden Permanentmagneten 43, 44 aufweist. Die Permanentmagnete 43, 44 sind jeweils von ringförmigen Permanentmagneten 45, 46 umgeben, die Teile des Stators sind und über eine kreisrunde Hülse 47 verbunden sind. Permenentmagnete 45, 46 und Hülse 47 sind aufgeschnitten und deshalb nur teilweise dargestellt, um den Rotor 42 sichtbar zu machen. Die Permanentmagnete 45, 46 sind in der gleichen Richtung magnetisiert wie die Permanentmagnete 43, 44 des Rotors 42, so daß zwischen den Permanentmagneten 43, 45 und 44, 46 abstoßende Magnetkräfte wirken, die den Rotor 42 radial zentrieren. Die jeweils benachbarten Paare von Permanentmagneten 43, 45 bzw. 44, 46 bilden passive Magnetlager.

Unterhalb der Stirnseite des unteren Permanentmagneten 43 des Rotors 42 ist ein zylinderförmiges Statorelement 48 angeordnet, das von einem Stromleiter 49, der aufgeschnitten dargestellt ist, umgeben ist. Der Stromleiter 49 ist Teil einer hier nicht näher dargestellten Stabilisiereinrichtung, zu der auch ein Lagesensor gehört, der die Vertikalstellung des Rotors 42 erfaßt. Die zwischen dem unteren Permanentmagneten 43 des Rotors 42 und dem Statorelement 48 wirkende Magnetkraft ist so bemessen, daß die Permanentmagnete 43, 44 des Rotors 42 gegenüber den sie umgebenden Permanentmagneten 45 bzw. 46 leicht nach oben versetzt sind, so daß ein Kräftegleichgewicht zwischen der von den Permanentmagneten 45, 46 ausgehenden, nach oben gerichteten Vertikalkraft und der Anziehungskraft zwischen dem Permanentmagneten 43 und dem Statorelement 48 herrscht. Wird der Rotor 42 vertikal ausgelenkt, erfaßt dies der Lagesensor und veranlaßt die Stabilisiereinrichtung, auf den Stromleiter 49 einen solchen Steuerstrom aufzugeben, daß die Magnetisierung des Statorelements 48 derart beeinflußt wird, daß der Rotor 42 wieder in seine Arbeitsposition zurückkehrt.

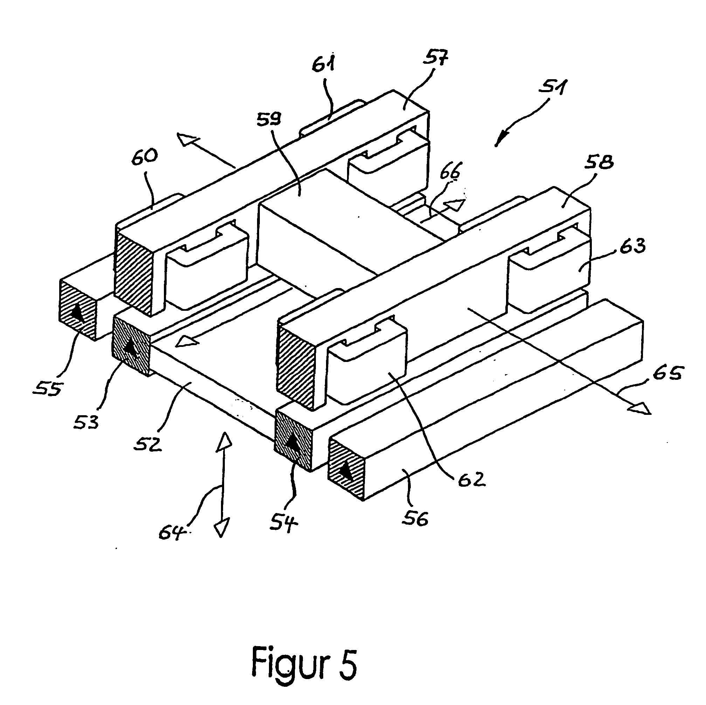

In Figur 5 ist eine Magnetlagerung gezeigt, die eine Variante der Magnetlagerung gemäß Figur 2 darstellt. Die Magnetlagerung 51 weist eine sich in der Horizontalen erstreckendes, plattenförmiges Bewegungselement 52 auf, das beidseits von stabförmigen Permanentmagneten 53, 54 begrenzt wird. Parallel dazu verlaufen statorseitige Permanentmagnete 55, 56, die in gleicher Richtung magnetisiert sind wie die Permanentmagnete 53, 54 an dem Bewegungselement 52. Auf diese Weise entstehen abstoßende Magnetkräfte zwischen den jeweils benachbarten Permanentmagneten 53, 55 bzw. 54, 56, die das Bewegungselement 52 seitlich führen. Jedes Paar von benachbarten Permanentmagneten 53, 55 bzw. 54, 56 bildet ein passives Magnetlager.

Oberhalb der Permanentmagnete 53, 54 des Bewegungselements 52 ist jeweils ein Statorelement 57, 58 angeordnet, das sich parallel zu den Permanentmagneten 53, 54 erstreckt und aus weichmagnetischem Stahl besteht. Die Statorelemente 57, 58 sind durch eine Brücke 59 verbunden.

Wie bei dem Ausführungsbeispiel gemäß Figur 2 weisen die Statorelemente 57, 58 jeweils zwei Stromleiter 60, 61 bzw. 62, 63 auf, die jeweils im Bereich der Enden der Statorelemente 57, 58 angeordnet sind. Jeder Stromleiter 60, 61, 62, 63 gehört zu einer eigenen Stabilisiereinrichtung mit jeweils einem Lagesensor, so daß die Stromleiter 60, 61, 62, 63 mit unterschiedlichen Steuerströmen beaufschlagt werden können.

Das Bewegungselement 52 wird durch die in vertikaler Richtung 64 wirkenden Magnetkräfte in einer Arbeitsposition gehalten, die gegenüber der von den Permanentmagneten 55, 56 eingenommenen Ebenen leicht nach unten versetzt ist. Auf diese Weise üben die Permanentmagnete 55, 56 auf das Bewegungselement 52 eine nach unten gerichtete Magnetkraft aus, die durch die zwischen den bewegungselementseitigen Permanentmagneten 53, 54 und der zugehörigen Statorelemente 57, 58 wirkenden Magnetkräfte kompensiert werden. Dabei sind die Permanentmagnete 53, 54 nicht nur Teil der passiven Magnetlager - jeweils bestehend aus den beiden benachbarten Permanentinagneten 55, 57 bzw. 56, 58 -, sondern auch Teil von zwei geregelten Magnetlagern, bestehend aus Permanentmagnet 53 und Statorelement 57 einerseits und Permanentmagnet 56 und Statorelement 58 andererseits. Eine Auslenkung des Bewegungselements 53 in vertikaler Richtung 64 wird durch die Lagesensoren erfaßt und führt zu einer Steuerstrombeaufschlagung der Stromleiter 60, 61, 62, 63, der die Auslenkung in Richtung auf die Arbeitsposition durch entsprechende Magnetisierung der Statorelemente 57, 58 rückgängig macht. Ein Kippen des Bewegungselements 52 um die Horizontalachse 65 wird ebenfalls von den Lagesensoren erfaßt, wobei die Stromleiter 60, 61, 62, 63 je nach Kippbewegung des Bewegungselements 52 unterschiedliche Steuerströme erhalten, die das Bewegungselement 52 wieder in die Arbeitsposition bringen.

Das Bewegungselement 52 ist in Richtung des Doppelpfeils 66 horizontal linear beweglich und kommt deshalb für Linearmotoren oder Linearführungen in Frage.

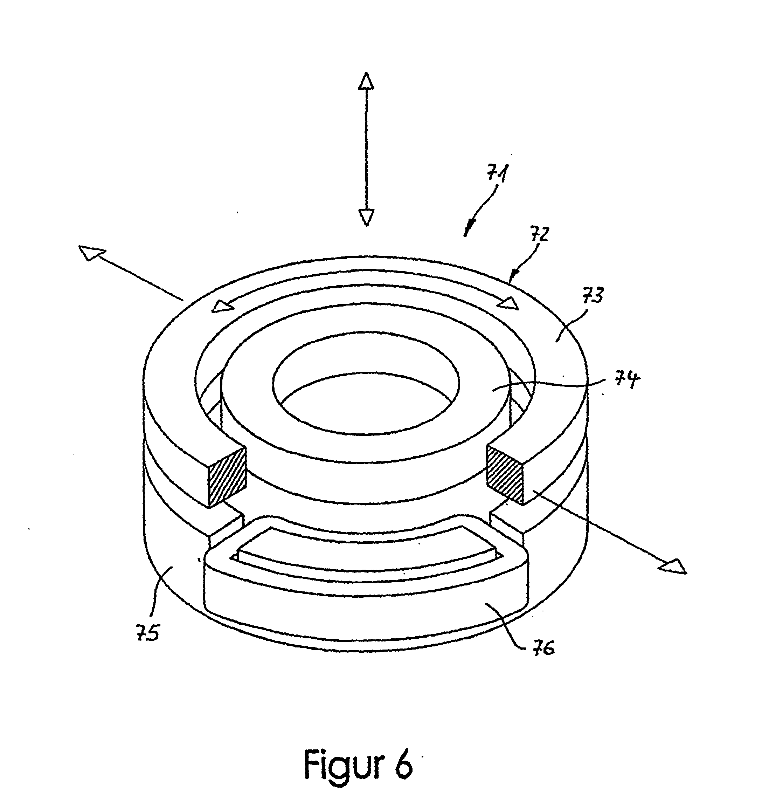

In Figur 6 ist eine Magnetlagerung 71 dargestellt, die einen ringförmigen Rotor 72 als Bewegungselement aufweist, der teilweise weggeschnitten dargestellt ist. Der Rotor 72 ist als Permanentmagnet 73 ausgebildet und umgibt einen statorseitigen Permanentmagneten 74. Beide Permanentmagnete 73, 74 sind in gleicher Richtung magnetisiert, so daß sie sich gegenseitig abstoßen und der Rotor 72 in der Horizontalen zentrisch zu dem Permanentmagneten 74 gehalten wird.

Unterhalb des Rotors 72 ist ein ringförmiges Statorelement 75 aus weichmagnetischem Stahl angeordnet. Über den Umfang des Statorelements 75 verteilt sind drei spulenförmig geführte Stromleiter 76, von denen hier nur einer gezeigt ist. Jeder Stromleiter 76 ist mit einer eigenen Stabilisiereinrichtung mit jeweils einem Lagesensor gekoppelt, die punktuell die vertikale Stellung des Rotors 72 erfassen.

Der Rotor 72 wird in einer Arbeitsposition gehalten, bei der er leicht nach oben gegenüber dem statorseitigen Permanentmagnet 74 versetzt ist. Hierdurch wirkt auf den Rotor 72 eine nach oben gerichtete Magnetkraft, die durch die Anziehungskraft zwischen Rotor 72 und Statorelement 75 so kompensiert wird, daß in der Arbeitsposition ein Kräftegleichgewicht in vertikaler Richtung gegeben ist. Bei einer Auslenkung des Rotors 72 aus dieser Arbeitsposition - sei es durch Parallelverschiebung nach oben oder unten und/oder durch Kippen um eine Horizontalachse - werden die Stromleiter 76 mit Steuerströmen entsprechend den von den Lagesensoren erfaßten Lageänderungen beaufschlagt, so daß das Statorelement 75 sektionsweise so magnetisiert wird, daß der Rotor 72 wieder in die Arbeitsposition zurückgeführt wird.

An dem Rotor 72 können alle Arten von Gebilden befestigt werden, deren Zweck es ist, in Drehung versetzt zu werden, beispielsweise Schaufelräder oder Scheiben zur Messung von Strömungsgeschwindigkeiten, aber auch Schaufelräder zum Einsatz in Pumpen, sofern die Magnetlagerung 71 mit einem Motor kombiniert wird, der den Rotor 72 in Drehung versetzt. Entsprechendes gilt für die Magnetlagerung 41 gemäß Figur 4.

Es versteht sich, daß die Magnetlagerung 71 gemäß Figur 6 auch dadurch variiert werden kann, daß der statorseitige Permanentmagnet 74 außenseitig angeordnet wird, so daß er den Rotor 72 umgibt, wie dies prinzipiell bei der Ausführungsform gemäß Figur 4 der Fall ist.

## Patentansprüche

1. Magnetlagerung (1, 11, 21, 41, 51, 71) für ein Bewegungselement mit folgenden Merkmalen:
a) die Magnetlagerung (1, 11, 21, 41, 51, 71) hat einen Stator;
b) in dem Stator ist das Bewegungselement (2, 13, 22, 42, 52, 72) in einer Bewegungsrichtung (4, 20, 66) beweglich gelagert;
c) die Magnetlagerung (1, 11, 21, 41, 51, 71) hat ein passives Magnetlager (3, 8, 9; 14, 15, 16; 23, 25, 27; 24, 26, 28; 43, 45; 44, 46; 53, 54, 55, 56; 73, 74) für die Seitenführung des Bewegungselements (2, 13, 22, 42, 52, 72) und ein regelbares Magnetlager (3, 5; 12, 14; 23, 29; 43, 48; 53, 57; 54, 58; 73, 75) für die Führung des Bewegungselements (2, 13, 22, 42, 52, 72) senkrecht zur Führung durch das passive (3, 8, 9; 14, 15, 16; 23, 25, 27; 24, 26, 28; 43, 45; 44, 46; 53, 54, 55, 56; 73, 74) Magnetlager;
d) das passive Magnetlager weist bewegungselementseitig und statorseitig angeordnete Permanentmagnete (3, 8, 9; 14, 15, 16; 23, 25, 27; 24, 26, 28; 43, 45; 44, 46; 53, 54, 55, 56; 73, 74) auf ;
e) die jeweils benachbarten Permanentmagnete (3, 8, 9; 14, 15, 16; 23, 25, 27; 24, 26, 28; 43, 45; 44, 46; 53, 55, 54, 56; 73, 74) sind sich gegenseitig abstoßend magnetisiert;
f) das regelbare Magnetlager (3, 5; 12, 14; 23, 29; 43, 48; 53, 57; 54, 58; 73, 75) übt auf das Bewegungselement (2, 13, 22, 42, 52, 72) eine Magnetkraft senkrecht zu dessen Bewegungsrichtung (4, 20, 66) aus;
g) das regelbare Magnetlager (3, 5; 12, 14; 23, 29; 43, 48; 53, 57; 54, 58; 73, 75) weist ein magnetisierbares Statorelement (5, 12, 29, 48, 57, 58, 75) auf;
h) das regelbare Magnetlager (3, 5; 12, 14; 23, 29; 43, 48; 53, 57; 54, 58; 73, 75) weist eine elektronische Stabilisiereinrichtung zur Steuerung der Magnetkraft auf;
i) die Stabilisiereinrichtung weist eine elektrische Stromleitung (6, 7; 18, 19; 30, 31; 49; 60, 61, 62, 63, 76) auf, die von der Stabilisiereinrichtung mit einem elektrischen Steuerstrom beaufschlagbar und dem Statorelement (5, 12, 29, 48, 57, 58, 75) derart zugeordnet ist, daß durch den Steuerstrom die Magnetisierung des Statorelements (5, 12, 29, 48, 57, 58, 75) beeinflußt wird;
j) die Stabilisiereinrichtung weist einen Lagesensor zur Erfassung der Lage des Bewegungselements (2, 13, 22, 42, 52, 72) auf;
k) in Abhängigkeit von den Signalen des Lagesensors steuert die Stabilisiereinrichtung den Steuerstrom derart, daß das Bewegungselement (2, 13, 22, 42, 52, 72) in einer Arbeitsposition gehalten wird, in der das passive Magnetlager (3, 8, 9; 14, 15, 16; 23, 25, 27; 24, 26, 28; 43, 45; 44, 46; 53, 54, 55, 56; 73, 74) eine Magnetkraft auf das Bewegungselement (2, 13, 22, 42, 52, 72) ausübt, die der Magnetkraft des regelbaren Magnetlagers (3, 5; 12, 14; 23, 29; 43, 48; 53, 57; 54, 58; 73, 75) entgegengesetzt ist;
**gekennzeichnet durch** folgende Merkmale:
l) das regelbare Magnetlager (3, 5; 12, 14; 23, 29; 43, 48; 53, 57; 54, 58; 73, 75) weist einen Permanentmagneten (3, 14, 23, 43, 53, 54, 73) auf;
m) der Permanentmagnet (3, 14, 23, 43, 53, 54, 73) ist am Bewegungselement (2, 13, 22, 42, 52, 72) gegenüber dem Statorelement (5, 12, 29, 48, 57, 58, 75) angeordnet;
n) die Magnetkraft zwischen Permanentmagnet (3, 14, 23, 43, 53, 54, 73) und Statorelement (5, 12, 29, 48, 57, 58, 75) ist so bemessen, daß das Bewegungselement (2, 13, 22, 42, 52, 72) bei Steuerstrom Null in der Arbeitsposition gehalten wird und daß nur bei Abweichung von dieser Arbeitsposition ein die Magnetisierung des Statorelements (5, 12, 29, 48, 57, 58, 75) in Richtung auf Wiederherstellung der Arbeitsposition beeinflussender Steuerstrom erzeugt wird.

2. Magnetlagerung nach Anspruch 1, **dadurch gekennzeichnet, daß** das Statorelement als Permanentmagnet ausgebildet ist.

3. Magnetlagerung nach Anspruch 1 oder 2, **dadurch gekennzeichnet, daß** die Permanentmagnete aus mehreren Teilmagneten bestehen.

4. Magnetlagerung nach einem der Ansprüche 1 bis 3, **dadurch gekennzeichnet, daß** das Statorelement (12; 57, 58, 75) mehrere Stromleiter (18, 19, 60, 61, 62, 63, 76) aufweist und jeder Stromleiter (18, 19, 60, 61, 62, 63, 76) Teil einer eigenen Stabilisiereinrichtung ist.

5. Magnetlagerung nach einem der Ansprüche 1 bis 4, **dadurch gekennzeichnet, daß** der Permanentmagnet (3, 14, 23, 43, 53, 54, 73) des regelbaren Magnetlagers (3, 5; 12, 14; 23, 29; 43, 48; 53, 57; 54, 58; 73, 75) gleichzeitig auch den bewegungselementseitigen Permanentmagneten (3, 14, 23, 43, 53, 54, 73) des zugehörigen passiven Magnetlagers bildet.

6. Magnetlagerung nach einem der Ansprüche 1 bis 5, **dadurch gekennzeichnet, daß** mehrere passive Magnetlager (23, 25, 27; 24, 26, 28; 43, 45; 44, 46) für die Seitenführung des Bewegungselements (22, 42) mit sich gegenseitig abstoßenden bewegungselementseitigen und statorseitigen Permanentmagneten (23, 25, 27; 24, 26, 28; 43, 45; 44, 46) vorgesehen ist.

7. Magnetlagerung nach Anspruch 6, **dadurch gekennzeichnet, daß** passive Magnetlager (23, 25, 27; 24, 26, 28; 43, 45; 44, 46) an den Endbereichen des Bewegungselements (22, 42) angeordnet sind.

8. Magnetlagerung nach einem der Ansprüche 1 bis 7, **dadurch gekennzeichnet, daß** mehrere beabstandete regelbare Magnetlager (53, 57; 54, 58) mit jeweils einem bewegungselementseitigen Permanentmagneten (53, 54) und einem Statorelement (57, 58) vorgesehen sind.

9. Magnetlagerung nach Anspruch 8, **dadurch gekennzeichnet, daß** jedem Statorelement (57, 58) wenigstens eine eigene Stabilisierungseinrichtung zugeordnet ist.

10. Magnetlagerung nach Anspruch 8 oder 9, **dadurch gekennzeichnet, daß** die regelbaren Magnetlager (53, 57; 54, 58) an den Enden des Bewegungselements (52) angeordnet sind und deren Permanentmagneten (53, 54) benachbart je ein statorseitiger Permanentmagnet (55, 56) eines passiven Magnetlagers (53, 54, 55, 56) derart zugeordnet ist, daß die Permanentmagnete (53, 54) der regelbaren Magnetlager (53, 57; 54, 58) gleichzeitig die bewegungselementseitigen Permanentmagnete (53, 54) des passiven Magnetlagers (53, 54; 55, 56) bilden.

11. Magnetlagerung nach einem der Ansprüche 1 bis 10, **dadurch gekennzeichnet, daß** das Bewegungselement (3, 14, 22, 52) als linear beweglicher Körper ausgebildet ist, dessen Permanentmagnet(e) (3; 14; 23, 24; 53, 54) sich wie die Permanentmagnete (3, 8, 9; 14, 15, 16; 23, 25, 27; 24, 26, 28; 53, 54, 55, 56) des bzw. der passiven Magnetlager(s) in Bewegungsrichtung erstrecken.

12. Magnetlagerung nach einem der Ansprüche 1 bis 10, **dadurch gekennzeichnet, daß** das Bewegungselement als Rotationskörper (42, 73) ausgebildet ist, dessen Permanentmagnet(e) (43, 44) wie auch das bzw. die Permanentmagnet(e) (43, 45; 44, 46) des bzw. der passiven Magnetlager(s) Kreisform hat bzw. haben.

13. Magnetlagerung nach Anspruch 12, **dadurch gekennzeichnet, daß** Bewegungselement (73) und Statorelement (75) Ringform haben und über das Statorelement (75) verteilt mehrere Stromleiter (76) angeordnet sind, die Teil selbständiger Stabilisiereinrichtungen sind.

14. Magnetlagerung nach Anspruch 12 oder 13, **dadurch gekennzeichnet, daß** der Permanentmagnet (73) des regelbaren Magnetlagers (73, 75) gleichzeitig den bewegungselementseitigen Permanentmagneten (73) des passiven Magnetlagers (73, 74) bildet und von dem statorseitigen Permanentmagneten (74) des passiven Magnetlageras (73, 74) umgeben ist.

15. Magnetlagerung nach Anspruch 12 oder 13, **dadurch gekennzeichnet, daß** der Permanentmagnet (73) des regelbaren Magnetlagers (73, 75) gleichzeitig den bewegungselementseitigen Permanentmagneten (73) des passiven Magnetlagers (73, 74) bildet und den statorseitigen Permanentmagneten (74) des passiven Magnetlagers (73, 74) umgibt.

16. Magnetlagerung nach Anspruch 12 oder 13, **dadurch gekennzeichnet, daß** der Permanentmagnet des regelbaren Magnetlagers gleichzeitig der bewegungselementseitige Permanentmagnet des passiven Magnetlagers bildet und innen- und außenseitig von je einem kreisförmigen statorseitigen Permanentmagneten des passiven Magnetlagers eingefaßt ist.

## Claims

1. A magnetic bearing arrangement (1, 11, 21, 41, 51, 71) for a motion element, having the following features:
a) the magnetic bearing arrangement (1, 11, 21, 41, 51, 71) has a stator;
b) in the stator, the motion element (2, 13, 22, 42, 52, 72) is mounted movably in a motion direction (4, 20, 66);
c) the magnetic bearing arrangement (1, 11, 21, 41, 51, 71) has a passive magnetic bearing (3, 8, 9; 14, 15, 16; 23, 25, 27; 24, 26, 28; 43, 45; 44, 46; 53, 54, 55, 56; 73, 74) for lateral guidance of the motion element (2, 13, 22, 42, 52, 72) and a controllable magnetic bearing (3, 5; 12, 14; 23, 29; 43, 48; 53, 57; 54, 58; 73, 75) for guidance of the motion element (2, 13, 22, 42, 52, 72) perpendicular to the guidance by way of the passive magnetic bearing (3, 8, 9; 14, 15, 16; 23, 25, 27; 24, 26, 28; 43, 45; 44, 46; 53, 54, 55, 56; 73, 74);
d) the passive magnetic bearing has permanent magnets (3, 8, 9; 14, 15, 16; 23, 25, 27; 24, 26, 28; 43, 45; 44, 46; 53, 54, 55, 56; 73, 73) arranged on the motion-element side and on the stator side;
e) the respectively adjacent permanent magnets (3, 8, 9; 14, 15, 16; 23, 25, 27; 24, 26, 28; 43, 45; 44, 46; 53, 54, 55, 56; 73, 74) are magnetized in mutually repulsive fashion;
f) the controllable magnetic bearing (3, 5; 12, 14; 23, 29; 43, 48; 53, 57; 54, 58; 73, 75) exerts a magnetic force on the motion element (2, 13, 22, 42, 52, 72) perpendicular to its motion direction (4, 20, 66);
g) the controllable magnetic bearing (3, 5; 12, 14; 23, 29; 43, 48; 53, 57; 54, 58; 73, 75) has a magnetizable stator element (5, 12, 29, 48, 57, 58, 75);
h) the controllable magnetic bearing (3, 5; 12, 14; 23, 29; 43, 48; 53, 57; 54, 58; 73, 75) has an electronic stabilization device for controlling the magnetic force;
i) the stabilization device has an electrical conductor (6, 7; 18, 19; 30, 31; 49; 60, 61, 62, 63, 76) that can have an electrical control current applied to it by the stabilization device and that is associated with the stator element (5, 12, 29, 48, 57, 58, 75) in such a way that the magnetization of the stator element (5, 12, 29, 48, 57, 58, 75) is influenced by the control current;
j) the stabilization device has a position sensor for sensing the position of the motion element (2, 13, 22, 42, 52, 72);
k) as a function of the signals of the position sensor, the stabilization device controls the control current in such a way that the motion element (2, 13, 22, 42, 52, 72) is held in a working position in which the passive magnetic bearing (3, 8, 9; 14, 15, 16; 23, 25, 27; 24, 26, 28; 43, 45; 44, 46; 53, 54, 55, 56; 73, 74) exerts on the motion element (2, 13, 22, 42, 52, 72) a magnetic force that is opposite to the magnetic force of the controllable magnetic bearing (3, 5; 12, 14; 23, 29; 43, 48; 53, 57; 54, 58; 73, 75);
**characterized by** the following features:
l) the controllable magnetic bearing (3, 5; 12, 14; 23, 29; 43, 48; 53, 57; 54, 58; 73, 75) has a permanent magnet (3, 14, 23, 43, 53, 54, 73);
m) the permanent magnet (3, 14, 23, 43, 53, 54, 73) is arranged on the motion element (2, 13, 22, 42, 52, 72) opposite the stator element (5, 12, 29, 48, 57, 58, 75);
n) the magnetic force between permanent magnet (3, 14, 23, 43, 53, 54, 73) and stator element (5, 12, 29, 48, 57, 58, 75) is dimensioned such that with a control current of zero, the motion element (2, 13, 22, 42, 52, 72) is held in the working position; and only upon deviation from that working position is a control current generated that influences the magnetization of the stator element (5, 12, 29, 48, 57, 58, 75) in the direction of re-establishing the working position.

2. The magnetic bearing arrangement as defined in Claim 1, wherein the stator element is embodied as a permanent magnet.

3. The magnetic bearing arrangement as defined in Claim 1 or 2, wherein the permanent magnets comprise several sub-magnets.

4. The magnetic bearing arrangement as defined in one of Claims 1 through 3, wherein the stator element (12; 57, 58, 75) has several electrical conductors (18, 19, 60, 61, 62, 63, 76), and each electrical conductor (18, 19, 60, 61, 62, 63, 76) is part of a separate stabilization device.

5. The magnetic bearing arrangement as defined in one of Claims 1 through 4, wherein the permanent magnet (3, 14, 23, 43, 53, 54, 73) of the controllable magnetic bearing (3, 5; 12, 14; 23, 29; 43, 48; 53, 57; 54, 58; 73, 75) also simultaneously constitutes the motion-element-side permanent magnet (3, 14, 23, 43, 53, 54, 73) of the associated passive magnetic bearing.

6. The magnetic bearing arrangement as defined in one of Claims 1 through 5, wherein several passive magnetic bearings (23, 25, 27; 24, 26, 28; 43, 45; 44, 46) having mutually repulsive motion-element-side and stator-side permanent magnets (23, 25, 27; 24, 26, 28; 43, 45; 44, 46) are provided for lateral guidance of the motion element (22, 42).

7. The magnetic bearing arrangement as defined in Claim 6, wherein passive magnetic bearings (23, 25, 27; 24, 26, 28; 43, 45; 44, 46) are arranged at the end regions of the motion element (22, 42).

8. The magnetic bearing arrangement as defined in one of Claims 1 through 7, wherein several spaced-apart controllable magnetic bearings (53, 57; 54, 58) are provided, each having a motion-element-side permanent magnet (53, 54) and a stator element (57, 58).

9. The magnetic bearing arrangement as defined in Claim 8, wherein at least one separate stabilization device is associated with each stator element (57, 58).

10. The magnetic bearing arrangement as defined in Claim 8 or 9, wherein the controllable magnetic bearings (53, 57; 54, 58) are arranged at the ends of the motion element (52), and their permanent magnets (53, 54) each have adjacently associated with them a stator-side permanent magnet (55, 56) of a passive magnetic bearing (53, 54, 55, 56), in such a way that the permanent magnets (53, 54) of the controllable magnetic bearings (53, 57; 54, 58) simultaneously constitute the motion-element-side permanent magnets (53, 54) of the passive magnetic bearing (53, 54; 55, 56).

11. The magnetic bearing arrangement as defined in one of Claims 1 through 10, wherein the motion element (3, 14, 22, 52) is embodied as a linearly movable member whose permanent magnet(s) (3; 14; 23, 24; 53, 54), like the permanent magnets (3, 8, 9; 14, 15; 16; 23, 25, 27; 24, 26, 28; 53, 54, 55, 56) of the passive magnetic bearing(s), extend in the motion direction.

12. The magnetic bearing arrangement as defined in one of Claims 1 through 10, wherein the motion element is embodied as a rotational member (42, 73) whose permanent magnet(s) (43, 44), like the permanent magnet(s) (43, 45; 44, 46) of the passive magnetic bearing(s), is/are circular in shape.

13. The magnetic bearing arrangement as defined in Claim 12, wherein the motion element (73) and stator element (75) have an annular shape, and several electrical conductors (76), which are part of independent stabilization devices, are arranged in distributed fashion over the stator element (75).

14. The magnetic bearing arrangement as defined in Claim 12 or 13, wherein the permanent magnet (73) of the controllable magnetic bearing (73, 75) simultaneously constitutes the motion-element-side permanent magnet (73) of the passive magnetic bearing (73, 74), and is surrounded by the stator-side permanent magnet (74) of the passive magnetic bearing (73, 74).

15. The magnetic bearing arrangement as defined in Claim 12 or 13, wherein the permanent magnet (73) of the controllable magnetic bearing (73, 75) simultaneously constitutes the motion-element-side permanent magnet (73) of the passive magnetic bearing (73, 74) and surrounds the stator-side permanent magnet (74) of the passive magnetic bearing (73, 74).

16. The magnetic bearing arrangement as defined in Claim 12 or 13, wherein the permanent magnet of the controllable magnetic bearing simultaneously constitutes the motion-element-side permanent magnet of the passive magnetic bearing, and is enclosed internally and externally by a respective circular stator-side permanent magnet of the passive magnetic bearing.

## Revendications

1. Suspension magnétique (1, 11, 21, 41, 51, 71) pour un élément mobile présentant les modalités suivantes :
a) la suspension magnétique (1, 11, 21, 41, 51, 71) comporte un stator ;
b) l'élément mobile (2, 13, 22, 42, 52, 72) est logé dans le stator de manière à pouvoir se déplacer dans une direction de mouvement (4, 20, 66) ;
c) la suspension magnétique (1, 11, 21, 41, 51, 71) comporte un palier magnétique passif (3, 8, 9 ; 14, 15, 16 ; 23, 25, 27 ; 24, 26, 28 ; 43, 45 ; 44, 46; 53, 54; 55, 56 ; 73, 74) pour le guidage latéral de l'élément mobile (2, 13, 22, 42, 52, 72) et un palier magnétique réglable (3, 5 ; 12, 14 ; 23, 29 ; 43, 48 ; 53, 57 ; 54, 58 ; 73, 75) pour le guidage de l'élément mobile (2, 13, 22, 42, 52, 72) perpendiculairement au guidage par le palier magnétique passif (3, 8, 9 ; 14, 15, 16 ; 23, 25, 27 ; 24, 26, 28 ; 43, 45 ; 44, 46 ; 53, 54, 55, 56 ; 73, 74) ;
d) le palier magnétique passif présente des aimants permanents (3, 8, 9 ; 14, 15, 16 ; 23, 25, 27; 24, 26, 28 ; 43, 45 ; 44, 46 ; 53, 54, 55, 56 ; 73, 74) disposés côté élément mobile et côté stator ;
e) les aimants permanents (3, 8, 9 ; 14, 15, 16 ; 23, 25, 27 ; 24, 26, 28 ; 43, 45 ; 44, 46 ; 53, 54, 55, 56 ; 73, 74) respectivement voisins sont magnétisés de manière à se repousser mutuellement ;
f) le palier magnétique réglable (3, 5 ; 12, 14; 23, 29 ; 43, 48 ; 53, 57 ; 54, 58 ; 73, 75) exerce sur l'élément mobile (2, 13, 22, 42, 52, 72) une force magnétique perpendiculairement à sa direction de mouvement (4, 20, 66) ;
g) le palier magnétique réglable (3, 5 ; 12, 14 ; 23, 29 ; 43, 48 ; 53, 57 ; 54, 58 ; 73, 75) présente un élément de stator magnétisable (5, 12, 29, 48, 57, 58, 75) ;
h) le palier magnétique réglable (3, 5 ; 12, 14 ; 23, 29 ; 43, 48 ; 53, 57 ; 54, 58 ; 73, 75) présente un dispositif stabilisateur électronique pour la commande de la force magnétique ;
i) le dispositif stabilisateur présente une ligne de courant électrique (6, 7 ; 18, 19 ; 30, 31 ; 49 ; 60, 61, 62, 63, 76) qui peut être alimentée par un courant électrique de commande par le dispositif stabilisateur et qui est associée à l'élément de stator (5, 12, 29, 48, 57, 58, 75) de telle manière que la magnétisation de l'élément de stator (5, 12, 29, 48, 57, 58, 75) soit influencée par le courant de commande ;
j) le dispositif stabilisateur présente un capteur de position pour la saisie de la position de l'élément mobile (2, 13, 22, 42, 52, 72) ;
k) le dispositif stabilisateur commande le courant de commande en fonction des signaux du capteur de position de telle manière que l'élément mobile (2, 13, 22, 42, 52, 72) soit maintenu dans une position de travail dans laquelle le palier magnétique passif (3, 8, 9 ; 14, 15, 16 ; 23, 25, 27 ; 24, 26, 28 ; 43, 45 ; 44, 46 ; 53, 54, 55, 56 ; 73, 74) exerce sur l'élément mobile (2, 13, 22, 42, 52, 72) une force magnétique qui est opposée à la force magnétique du palier magnétique réglable (3, 5 ; 12, 14 ; 23, 29 ; 43, 48 ; 53, 57 ; 54, 58 ; 73,75) ;
**caractérisée par** les modalités suivantes :
l) le palier magnétique réglable (3, 5 ; 12, 14 ; 23, 29 ; 43, 48 ; 53, 57 ; 54, 58 ; 73, 75) présente un aimant permanent (3, 14, 23, 43, 53, 54, 73) ;
m) l'aimant permanent (3, 14, 23, 43, 53, 54, 73) est disposé sur l'élément mobile (2, 13, 22, 42, 52, 72) en face de l'élément de stator (5, 12, 29, 48, 57, 58, 75) ;
n) la force magnétique entre aimant permanent (3, 14, 23, 43, 53, 54, 73) et élément de stator (5, 12, 29, 48, 57, 58, 75) est dimensionnée de telle manière que l'élément mobile (2, 13, 22, 42, 52, 72) soit maintenu dans la position de travail lorsque le courant de commande est nul et qu'un courant de commande influençant la magnétisation de l'élément de stator (5, 12, 29, 48, 57, 58, 75) en direction du rétablissement de la position de travail ne soit généré qu'en cas de déviation par rapport à cette position de travail.

2. Suspension magnétique selon la revendication 1, **caractérisée par le fait que** l'élément de stator est réalisé sous la forme d'un aimant permanent.

3. Suspension magnétique selon la revendication 1 ou 2, **caractérisée par le fait que** les aimants permanents sont composés de plusieurs sous-aimants.

4. Suspension magnétique selon l'une des revendications 1 à 3, **caractérisée par le fait que** l'élément de stator (5, 57, 58, 75) présente plusieurs conducteurs de courant (18, 19, 60, 61, 62, 63, 76) et que chaque conducteur de courant (18, 19, 60, 61, 62, 63, 76) fait partie d'un dispositif stabilisateur séparé.

5. Suspension magnétique selon l'une des revendications 1 à 4, **caractérisée par le fait que** l'aimant permanent (3, 14, 23, 43, 53, 54, 73) du palier magnétique réglable (3, 5 ; 12, 14 ; 23, 29 ; 43, 48 ; 53, 57 ; 54, 58 ; 73, 75) forme en même temps l'aimant permanent (3, 14, 23, 43, 53, 54, 73) côté élément mobile du palier magnétique passif associé.

6. Suspension magnétique selon l'une des revendications 1 à 5, **caractérisée par le fait qu'**il est prévu plusieurs paliers magnétiques passifs (23, 25, 27 ; 24, 26, 28 ; 43, 45 ; 44, 46) pour le guidage latéral de l'élément mobile (22, 42) avec des aimants permanents (23, 25, 27 ; 24, 26, 28 ; 43, 45 ; 44, 46) côté élément mobile et côté stator se repoussant mutuellement.

7. Suspension magnétique selon la revendication 6, **caractérisée par le fait que** des paliers magnétiques passifs (23, 25, 27 ; 24, 26, 28 ; 43, 45 ; 44, 46) sont disposés aux extrémités de l'élément mobile (22, 42).

8. Suspension magnétique selon l'une des revendications 1 à 7, **caractérisée par le fait qu'**il est prévu plusieurs paliers magnétiques réglables (53, 57 ; 54, 58) espacés avec chaque fois un aimant permanent (53, 54) côté élément mobile et un élément de stator (57, 58).

9. Suspension magnétique selon la revendication 8, **caractérisée par le fait qu'**au moins un dispositif stabilisateur séparé ou propre est associé à chaque élément de stator (57, 58).

10. Suspension magnétique selon la revendication 8 ou 9, **caractérisée par le fait que** les paliers magnétiques réglables (53, 57 ; 54, 58) sont disposés aux extrémités de l'élémént mobile (52) et qu'à chacun de leurs aimants permanents (53, 54) est associé à leur voisinage un aimant permanent côté stator (55, 56) d'un palier magnétique passif (53, 54 ; 55, 56) de telle manière que les aimants permanents (53, 54) des paliers magnétiques réglables (53, 57 ; 54, 58) forment en même temps les aimants permanents (53, 54) côté élément mobile du palier magnétique passif (53, 54 55, 56).

11. Suspension magnétique selon l'une des revendications 1 à 10, **caractérisée par le fait que** l'élément mobile (3, 14, 22, 52) est réalisé sous la forme d'un corps mobile linéairement dont le ou les aimant(s) permanent(s) (3 ; 14 ; 23, 24 ; 53, 54) s'étend(ent) comme les aimants permanents (3, 8, 9 ; 14, 15, 16 ; 23, 25, 27 ; 24, 26, 28 ; 53, 54, 55, 56) du ou des palier(s) magnétique(s) passif(s) dans la direction de mouvement.

12. Suspension magnétique selon l'une des revendications 1 à 10, **caractérisée par le fait que** l'élément mobile (3, 14, 22, 52) est réalisé sous la forme d'un corps de révolution (42,73) dont le ou les aimant(s) permanent(s) (43, 44) a/ont comme le ou les aimant(s) permanent(s) (43, 45 ; 44, 46) du ou des palier(s) magnétique(s) passif(s) une forme circulaire.

13. Suspension magnétique selon la revendication 12, **caractérisée par le fait que** l'élément mobile (73) et l'élément de stator (75) ont une forme toroïdale et que plusieurs conducteurs de courant (76) qui font partie de dispositifs stabilisateurs indépendants sont répartis sur l'élément de stator (75).

14. Suspension magnétique selon la revendication 12 ou 13, **caractérisée par le fait que** l'aimant permanent (73) du palier magnétique réglable (73, 75) forme en même temps l'aimant permanent (73) côté élément mobile du palier magnétique passif (73, 74) et est entouré par l'aimant permanent (74) côté stator du palier magnétique passif (73, 74).

15. Suspension magnétique selon la revendication 12 ou 13, **caractérisée par le fait que** l'aimant permanent (73) du palier magnétique réglable (73, 75) forme en même temps l'aimant permanent (73) côté élément mobile du palier magnétique passif (73, 74) et entoure l'aimant permanent (74) côté stator du palier magnétique passif (73, 74).

16. Suspension magnétique selon la revendication 12 ou 13, **caractérisée par le fait que** l'aimant permanent du palier magnétique réglable forme en même temps l'aimant permanent côté élément mobile du palier magnétique passif et est bordé intérieurement et extérieurement par un aimant permanent côté stator circulaire du palier magnétique passif.
